# NEW EUROPEAN PATENT SPECIFICATION

(11) **EP 0 724 611 B2**
(45) Date of publication and mention of the opposition decision: **02.07.2003**
(45) Mention of the grant of the patent: 28.01.1998
(21) Application number: 94930180.8
(22) Date of filing: 17.10.1994
(51) Int. Cl.: C09D 5/03, B05D 5/06, B05D 7/00

(54) **THERMOSETTING POWDERED PAINTS AND TWO-COAT PAINTING PROCESS FOR THERMOSETTING POWDERED PAINTS**
WÄRMEHÄRTENDE PULVERLACKE UND ZWEISCHICHT-BESCHICHTUNGSVERFAHREN FÜR WÄRMEHÄRTENDE PULVERLACKE
PEINTURES EN POUDRE THERMODURCISSABLES ET PROCEDE DE PEINTURAGE EN DEUX COUCHES DESTINE A DES PEINTURES EN POUDRE THERMODURCISSABLES

(30) Priority: 22.10.1993 IT MI932250
(43) Date of publication of application: 07.08.1996
(73) Proprietor: Arsonsisi S.P.A., 20139 Milano (IT)
(72) Inventor: GOEBEL JUNGHANNS, Carlo, Alberto, I-20020 Arese (IT)
(74) Representative: Modiano, Guido, Dr.-Ing.
(86) International application number: EP9403411
(87) International publication number: WO95019399

(56) References cited:
- EP-A- 0 459 048
- WO-A-91/18951
- DATABASE WPI Section Ch, Week 7909, Derwent Publications Ltd., London, GB; Class A82, AN 79-16846B & JP,A,54 008 641 (TOYOTA MOTOR KK) 23 January 1979

## Description

The present invention relates to a two coat painting process for thermosetting powder paints, thermosetting powder paints, particularly for industrial applications, in various colors which, when mixed together and then applied with a particular two-coat cycle, allow to obtain uniform tints with high hiding power that cannot be obtained with the thermosetting powder paints used so far, which produce the phenomenon known as "salt-and-pepper" effect if they are of different colors and mixed together.

Paints have been known and used since antiquity; they were initially produced by using oils, natural resins, colored earths and oxides, and have always been appreciated by mankind for their ability to protect and decorate everyday items.

The continuous search for new products and new application systems, as well as the need to reduce the pollutant content of liquid paints, which can be used only with solvents and more recently with small amounts of water, have led to the creation of thermoplastic powders that use high-molecular-weight resins.

However, these powders have demonstrated limits to their use.

A logical consequence of this has been the development of low- and medium-molecular-weight polymers that can be catalyzed with hardeners by using heat to obtain thermosetting polymers which as such can no longer be altered by the action of heat.

Such paints have been studied and tested in the mid-Sixties in the United States as technological (anticorrosion) epoxy powders and have enjoyed considerable development and diversification in Europe, especially in Germany and Italy, allowing them to meet the most disparate requirements.

Powder paints currently used are, in order of decreasing utilization:
-- epoxy-polyesters
-- polyesters
-- epoxy paints
-- polyurethane paints
-- acrylic paints

The formulations of thermosetting powder paints entail the use of raw materials (resins, catalysts, dilatants, deaerating agents, various additives, solid pigments, and fillers) that are specific for each system.

The production process includes the pre-mixing of all the components of the formulation and the extrusion of the mixture, which allows to obtain perfect homogenization by virtue of the action of considerable shearing forces while heat is applied.

The extruded mass is immediately calendered to achieve the quickest possible cooling.

Subsequent milling reduces the material to a powder in which 99% of the grains measure less than 100 µm (100 microns) and no more than 5% of the grains measure less than 10 µm (10 microns). All these operations are checked constantly by using very modem state-of-the-art checking instruments.

Thermosetting powder paints are applied in automatic or semiautomatic industrial plants that include the application booth, which fully recovers the product that has not adhered to the parts, the associated fluid bed for fluidifying the powder, and the system of movable or fixed electrostatic guns that dispense the powder through an electric field with the aid of low-pressure compressed air.

The objects to be coated are suspended from an aerial chain conveyor as they pass through the booth, where most of the dispensed electrically-charged powder adheres to the parts, which are sent to the curing oven.

The thicknesses that can be obtained, measured after curing, vary between approximately 40 and 80 µm (40 and 80 microns).

Known from WO 91/18951 is a composition for application as a powder coating in the form of a fused agglomerate of different particulate components consisting of a primary film-coating component and one or more other components selected from film-forming and non-film forming components.

EP-A-0459048 discloses a coloured powder coating composition consisting of solid particles, each of which comprises a solid polymeric binder system and at least the majority of which contains at least one colouring agent, the composition being a mixture of at least two different colours, and the size of the particles being sufficiently low that when the powder coating is applied to a substrate and heated to form a continuous coating the differences in colour in the cured powder coating arising from the different coloured particles cannot be discerned by the human eye.

SU-734238 discloses a powder form paint comprising a polyester resin, a thermosetting acrylic copolymer, a hardener, a surfactant, a pigment and a filler.

JP-A-54008641 discloses a composition comprising two or more coating powders having different color tone and bright pigments or bright pigments converted to coating powders.

As already tested in liquid paints, chemically different powders, too, are often mutually incompatible. Furthermore, if one mixes two pigmented powders of different colors, composed of compatible or incompatible resins, one obtains a powder that produces, when applied, a film of paint having a speckled appearance and an uneven color (salt-and-pepper effect). In summary, the advantages of the. thermosetting powder paints used so far are:
-- absence of volatile products (solvents)
-- quick, automatic and cheap execution of the painting cycle
-- coating with considerable thicknesses (40-80 µm) (40-80 microns) in a single coat
-- high mechanical strength and anti-corrosion resistance.

However, thermosetting powder paints are not free from drawbacks.

Regardless of the chemical nature of the products, a mixture of two or more powder paints of different colors can produce, once applied, a film of powder paint which has insufficient dilatation properties, loses sheen and always has a non-uniform color (salt-and-pepper effect). Accordingly it is not possible to obtain a coating of powder paint that has a desired color or hue of a color and is uniform if one uses a mixture of two or more conventional powder paints of different colors.

The aim of the present invention is to eliminate the drawbacks described above in known types of thermosetting powder paint, providing a process that allows to obtain paint coatings with a practically unlimited range of colors and hues of colors, which are uniform and have great hiding power, by using a limited number of base colors.

This aim is achieved by the processes according to claims 1 and 2.

Utilization of the property of a wide range of organic pigments or dyes to bleed from a first coat of paint to a second overcoat allows to eliminate the drawbacks due to the "salt-and-pepper" effect and allows, by mixing a limited number of base colors, to obtain an almost unlimited range of uniform colors with high covering power. This last concept is commonly referenced to as "tintometric system".

The term "bleeding", as used here, concerns the characteristic of a paint product of releasing one or more substances that characterize the color and consequently modify the color itself. This characteristic of a paint product is usually considered a "defect" that leads to an "alteration" of the color of the final coat.

The Applicant has found that within the process of the invention the "bleeding" characteristic of some dyes or pigments, hereinafter referred to as "bleeding dyes or pigments" can be used to obtain a wide range of colors and hues of color which are uniform and have a high hiding power for coatings obtained by painting.

Advantageously, the paint used in the present invention furthermore comprises a metallic powder that gives a metallic appearance to the coating obtained by painting. The metallic powder is preferably constituted by aluminum powder.

Any pigment or dye having bleeding properties and comprised within the classes of acid dyes, azoic combinations, basic dyes, developers, direct dyes, disperse dyes, fluorescent brighteners, food dyes, chrome dyes, natural dyes, oxidation bases. pigments, reactive dyes, reducing agents, solvents dyes, sulfur dyes, and vat dyes, can be used as bleeding pigment or dye.

Examples of preferred bleeding dyes or pigments for providing the paints used in the present invention are chosen among the following materials of the Color Index, according to their generic names:

| | |
|---|---|
| ZAPON GELB 156^{R} (BASF) | Cl SOLVENT YELLOW 21 |
| HANSA BRILLANT GELB 56x^{R} (HOECHST) | Cl PIGMENT YELLOW 74 |
| SOLVAPERM BLAU B^{R} (HOECHST) | Cl SOLVENT VIOLET 13 |
| SOLVAPERM ROSSO BBR (HOECHST) | Cl SOLVENT RED 195 |
| SOLVAPERM ORANGE G^{R} (HOECHST) | Cl SOLVENT ORANGE 60 |
| THERMOPLAST GELB 104^{R} (BASF) | Cl SOLVENT YELLOW 93 |
| SOLVAPERM GRUN G^{R} (HOECHST) | Cl SOLVENT GREEN 28 |
| SOLVAPERM ROTVIOLETT R^{R} (HOECHST) | Cl DISPERSE VIOLET 26 |
| SOLVAPERM GIALLO G^{R} (HOECHST) | Cl DISPERSE YELLOW 64 |
| MACROLEX BLAU RR^{R} (BAYER) | Cl SOLVENT BLUE 97 |

Conveniently, the bleeding dye or pigment is present in the paint used in the present invention in concentrations between 0.0001% and 50% by weight.

The range of bleeding dye or pigment concentrations in the paint used in the present invention between 0.005 and 5% by weight is particularly preferred.

The resins used in paints used in the present invention are epoxy resins, polyester resins, polyurethane resins, or acrylic resins, individually or in combination with each other.

The thermosetting powder paint used in the process according to the present invention preferably has an average powder particle size of 10 to 100 µm (10 to 100 microns). Advantageously, 99% of the particles have dimensions of less than 100 µm (100 microns) and less than approximately 5% of the particles have dimensions of less than 10 µm (10 microns).

Furthermore, the present invention provides a process using a composition of thermosetting powder paint that comprises a mixture of at least two thermosetting powder paints which comprise a resin, a bleeding dye or pigment, and a filler, wherein the at least two thermosetting powder paints contain bleeding dyes or pigments of different colors.

The thermosetting powder paints containing a bleeding dye or pigment, used in the present invention, which are mixed to obtain the above mentioned composition or formulation may contain the same resins and fillers or different resins and/or fillers.

The powder paints are mixed, in order to obtain the composition or formulation of paints according to the process of the present invention, by using conventional powder mixing techniques, such as manual mixing, mixing with drum-turning machines, or mixing in fluid beds.

Manual mixing is performed (for example inside a bag or a bucket which are agitated manually) when small amounts are to be mixed by introducing, in a bag or bucket, the amounts of powder paint, weighed to the desired quantities, and by mixing manually for approximately ten minutes, agitating the container to obtain a uniform mixture.

Mixing with drum-turning machines is performed in the case of large amounts by introducing in a drum the amounts of powder paint to be mixed in the desired ratios and by making the drum revolve on appropriate devices (drum turning machines). Mixing lasts approximately ten minutes.

Mixing can also occur directly in a fluid bed after carefully checking the amounts of the individual components and after waiting, while the fluid bed is active, for approximately five minutes to obtain a uniform mixture.

In the present invention, a coating is provided which is based on thermosetting powder paints and comprises a first coat containing at least one thermosetting powder paint, that contains a bleeding dye or pigment, and a second coat of transparent or colored transparent thermosetting powder paint.

Advantageously, the coating, based on thermosetting powder paints, obtained according to the present invention comprises a first coat, which contains a composition of powder paints constituted by a mixture of thermosetting powder paints that contain a bleeding dye or pigment, and a second coat of transparent or colored transparent thermosetting powder paint.

According to the present invention, a two-coat painting process is provided which includes the following steps:
a) application of a first coat of thermosetting powder paint, which comprises resin, fillers, and bleeding dye or pigment, to the surface to be painted;
b) first curing in an oven to harden said first coat of paint;
c) application of a second coat of transparent thermosetting powder paint on the first coat of hardened paint;
d) second curing in an oven to make the dye or pigment of the first coat bleed, dissolving it uniformly inside the second coat while the second coat hardens.

The first and second curing steps, preferably, take place between 120 and 240°C.

The total thickness of the first and second coats after curing is, preferably, between 40 and 200 µm (40 and 200 microns).

At least two thermosetting powder paints are used, where said at least two paints contain bleeding pigments or dyes of different colors to obtain a uniformly colored coating having a color, or hue of color, different from the colors of the said thermosetting powder paints.

The Applicant has found that the uniformity of the color and the hue of color of the final coating does not depend on the thickness of the two coats of paint applied.

The present invention furthermore provides a two-coat painting process which is similar to the one described above except for the fact that the first coat contains a composition or formulation that includes at least two thermosetting powder paints according to the present invention which comprise bleeding dyes or pigments of different colors.

According to the present invention, a coat of priming powder paint is applied which contains one or more bleeding dyes or pigments with the optional addition of metallic pigments, pearly pigments, polyester glitter or fine metallic grains.

After performing appropriate curing, a second coat of transparent, colorless or colored thermosetting powder paint, with a degree of sheen that can vary between 5 and 110 gloss, measured with an angle of 60°, is applied over the first coat.

By virtue of the action of the heat. the dyes or pigments bleed from the first coat in which they are contained and dissolve uniformly inside the second coat.

Accordingly, by applying a mixture of two or more powder paints that contain different bleeding dyes or pigments a film is obtained that once overpainted has a new tint with a compact and uniform appearance and a high hiding power.

This phenomenon occurs independently of the chemical nature of the powder paints and of the thicknesses of the applied coats.

It is therefore possible to superimpose coats of polyester. epoxy-polyester, epoxy, polyurethane or acrylic powder paints according to the specific requirements. provided that they are further covered by the coat of transparent or colored transparent paint.

By using a powder paint that does not contain bleeding dyes or pigments mixed with one or more powder paints that contain bleeding dyes or pigments (individual ones or different ones) it is possible to decrease the coloring force of the first coat.

Preferably, the first and the second curing in an oven is performed at a temperature between 120 and 240°C, and the total thickness of the first and second coats after curing is in the range between 40 and 200 µm (40 and 200 microns).

The resins included in the transparent thermosetting powder paint of the present invention are chosen in the group constituted by epoxy resins, polyester resins, polyurethane resins, acrylic resins, and mixtures thereof.

At least two thermosetting powder paints, said at least two paints containing bleeding pigments or dyes of different colors. can be used to obtain a coating in a color, or hue of color, that is different from the colors of the at least two thermosetting powder paints, said coating having a uniform color.

The following examples are given only by way of example.

### Example 1

By mixing, in appropriate ratios, a powder paint that contains a red dye or pigment and a powder paint that contains a blue dye or pigment, a violet color is obtained that is more or less bluish or reddish according to the bleeding dye or pigment that prevails in the mixture.

25 kg of a blue powder paint (with tristimulus values X=10.35, Y=9.61, and Z=22) are mixed with 25 kg of a red powder paint (tristimulus values X=18.65, Y=11.77. Z=13.87) in a fluid bed (0.75 m base x 0.5 m x 0.5 m height) with incoming air pressure at 1.52 x 10⁵ Pa (1.5 atm). The mixing time is set to 5 minutes. At the end of the mixing, the powder paint thus obtained is applied with an electrostatic gun on a metal part which is then placed in an oven set to 180°C and is cured for approximately 20 minutes.

Once cooled. the part is overpainted with a transparent powder paint and returned to the oven for another 20 minutes at 180°C. At the end of the curing cycle, the part has a uniform violet color (tristimulus values X=9.16, Y=8.95, Z=15.57) which has a compact and uniform appearance (maximum delta E between the different reading points is 0.5).

Readings were made with a spectrophotometer according to CIBLAB color space 1976, illuminate D 65 10° observer.

The tristimulus values (X Y Z) are calculated by means of the reflectances of the color being tested. correspond to the three primary colors, red (X), green (Y), and blue (Z), and are specific for each individual hue of color.

### Example 2

By mixing, in appropriate ratios, a thermosetting powder paint (which comprises a resin, a bleeding dye or pigment, and a filler) and a thermosetting powder paint (which comprises a resin, a filler and a metallic pigment) it is possible to decrease the coloring force of the "bleeding" paint.

25 kg of a blue powder paint (with tristimulus values X=10.35, Y=9.61. and Z=22) are mixed with 25 kg of a pigment-free powder paint in a fluid bed (0.75 m base x 0.5 m x 0.5 m height) with incoming air pressure at 1.52 x 10⁵ Pa (1.5 atm).

The mixing time is set to 5 minutes. At the end of the mixing, the powder paint thus obtained is applied with an electrostatic gun on a metal part which is then placed in an oven set to 180°C and is cured for approximately 20 minutes.

Once cooled. the part is overpainted with a transparent thermosetting powder paint and returned to the oven for another 20 minutes at 180°C. At the end of the curing cycle. the part has a uniform light blue color (tristimulus values X=12.25. Y=12.25. Z=31.6) which has a compact and uniform appearance (maximum delta E between the different reading points is 0.5).

### Example 3

By mixing, in appropriate ratios. a thermosetting powder paint (which comprises a resin. a bleeding dye or pigment. and a filler), another thermosetting powder paint (which comprises a resin. a bleeding dye or pigment, and a filler). and a thermosetting powder paint (which comprises a resin. a metallic pigment. and a filler), it is possible to obtain a tint that is not as intense as the "bleeding" tints used in the mixture itself.

12.5 kg of a blue powder paint (with tristimulus values X=10.35. Y=9.61. and Z=22) are mixed with 12.5 kg of a red powder paint (with tristimulus values X=18.65. Y=11.77. and Z=13.87) and with 25 kg of a pigment-free powder paint in a fluid bed (0.75 m base x 0.5 m x 0.5 m height) with incoming air pressure at 1.52 x 10⁵ Pa (1.5 atm). The mixing time is set to 5 minutes. At the end of the mixing, the powder paint thus obtained is applied with an electrostatic gun on a metal part which is then placed in an oven set to 180°C and is cured for approximately 20 minutes.

Once cooled, the part is overpainted with a transparent thermosetting powder paint and returned to the oven for another 20 minutes at 180°C. At the end of the curing cycle, the part has a violet color (tristimulus values X=16, Y=15.2, Z=34.2) which has a compact and uniform appearance (maximum delta E between the different reading points is 0.5).

### Example 4

By mixing in appropriate ratios. a thermosetting powder paint (which comprises a resin, a bleeding dye or pigment, and a filler) and another thermosetting powder paint (which comprises a resin, a non-bleeding pigment, and a filler) it is possible to obtain a tint having a uniform hue and appearance.

25 kg of a blue powder paint that contains a bleeding pigment or dye are mixed with 25 kg of a powder paint that contains a non-bleeding dye or pigment in a fluid bed (0.75 m base x 0.5 m x 0.5 m height) with incoming air pressure at 1.52 x 10⁵ Pa (1.5 atm).

The mixing time is set to 5 minutes.

At the end of the mixing, the powder paint thus obtained is applied with an electrostatic gun on a metal part which is then placed in an oven set to 180°C and is cured for approximately 20 minutes.

Once cooled, the part is overpainted with a transparent thermosetting powder paint and returned to the oven for another 20 minutes at 180°C. At the end of the curing cycle, the part has a compact and uniform color.

These examples are also valid for thermosetting powder paints having a surface finish other than the conventional smooth one. It is thus possible to mix orange-peel paints, textured paints.

With the Arsonmix system it is also possible to extend the range of finishes with effects that are different from the source by adding other raw materials, maintaining the prerogatives of the primary Arsonmix system, which is the bleeding between a first and a second coats of thermosetting powder paint.

Thermosetting powder paints which contain a bleeding dye or pigment, allow the user to obtain coatings with a practically unlimited range of colors or hues of color, chosen personally and according to one's individual preferences, by using a relatively small number of base paints as starting materials. The compositions or formulations of thermosetting powder paints that contain a mixture of at least two thermosetting powder paints invention can be prepared simply and directly by the user in the desired amounts (even very small ones).

Whereas in conventional coating and in the corresponding conventional two-coat painting process that uses thermosetting powder paints the second transparent coat only acts as additional protection, in the two-coat painting process according to the present invention the transparent coat has the task of making the dye or pigment comprised in the first coat of paint "bleed", consequently dissolving into the second transparent coat. In this manner the thermosetting powder paints allows to obtain a coating having a uniform color even when the first coat comprises a mixture of paints of different colors, whereas in the conventional two-coat system if the first coat comprises a mixture of thermosetting powder paints with non-bleeding dyes or pigment of different colors. the coating that is obtained does not have a uniform color. since the so-called "salt-and-pepper" effect is obtained.

## Claims

1. Two-coat painting process which comprises the steps of:
a) applying to the surface to be painted a first coat of thermosetting powder paint comprising resins, at least one pigment or dye, and a filler, said pigment or dye being a bleeding pigment or dye;
b) first curing in an oven to harden said first coat of paint;
c) applying a second coat of transparent thermosetting powder paint on the hardened first coat of paint;
d) second curing in an oven to bleed the pigment or dye contained in the first coat of paint for dissolving them uniformly inside the second coat of paint while said second coat hardens.

2. Two-coat painting process which comprises the steps of:
a) applying to the surface to be painted a composition of thermosetting powder paint comprising a mixture of at least two thermosetting powder paints each comprising resins, at least one pigment or dye, and a filler, said pigment or dye being a bleeding pigment or dye, said at least two paints containing bleeding pigments or dyes of different colors;
b) first curing in an oven to harden said first coat;
c) applying a second coat of transparent thermosetting powder paint on the hardened first coat;
d) second curing in an oven to harden said second coat while the bleeding pigments or dyes contained in the first coat bleed and dissolve uniformly in the second coat.

3. Process according to claim 1 or 2, **characterized in that** the step that includes the first curing in an oven is performed at a temperature between 120 and 240°C.

4. Process according to claim 1 or 2, **characterized in that** the step that includes the second curing in an oven is performed at a temperature in the range between 120 and 240°C.

5. Process according to claim 1 or 2, **characterized in that** the total thickness of the first and second coats after curing is in the range between 40 and 200 µm (40 and 200 microns).

6. Process according to claim 1 or 2, **characterized in that** said transparent thermosetting powder paint comprises resins chosen in the group constituted by epoxy resins, polyester resins, polyurethane resins, acrylic resins, and mixtures thereof.

7. Process according to claim 1 or 2, **characterized in that** said second coat of transparent thermosetting powder paint has a sheen between 5 and 110 gloss, measured at an angle of 60°.

## Patentansprüche

1. Zweischichtiges Färbeverfahren mit folgenden Schritten:
a) Aufbringen einer ersten Schicht einer wärmehärtbaren Pulverfarbe, die Kunstharze, zumindest ein Pigment oder einen Farbstoff und ein Füllmittel enthält, auf die zu färbende Fläche, wobei das Pigment oder der Farbstoff abschmutzend ist;
b) erste Wärmebehandlung in einem Ofen zum Härten der ersten Farbschicht;
c) Aufbringen einer zweiten Schicht aus transparenter wärmehärtbarer Pulverfarbe auf die gehärtete erste Farbschicht;
d) zweite Wärmebehandlung in einem Ofen zum Abschmutzen des Pigments oder Farbstoffs in der ersten Farbschicht zum gleichmäßigen Auflösen in der zweiten Farbschicht, während die zweite Farbschicht aushärtet.

2. Zweischichtiges Färbeverfahren mit folgenden Schritten:
a) Aufbringen einer Zusammensetzung aus wärmehärtbaren Pulverfarben, die eine Mischung von mindestens zwei wärmehärtbaren Pulverfarben enthält, von denen jede Kunstharze, zumindest ein Pigment oder einen Farbstoff und ein Füllmittel enthält, auf die zu färbende Fläche, wobei das Pigment oder der Farbstoff abschmutzend ist und die mindestens zwei Farben abschmutzende Pigmente oder Farbstoffe unterschiedlicher Farben enthalten;
b) erste Wärmebehandlung in einem Ofen zum Härten der ersten Schicht;
c) Aufbringen einer zweiten Schicht aus transparenter wärmehärtbarer Pulverfarbe auf die gehärtete erste Schicht;
d) zweite Wärmebehandlung in einem Ofen zum Härten der zweiten Schicht, während die abschmutzenden Pigmente oder Farbstoffe in der ersten Schicht abschmutzen und sich gleichmäßig in der zweiten Schicht lösen.

3. Verfahren nach Anspruch 1 oder 2, **dadurch gekennzeichnet, daß** der Schritt der ersten Wärmebehandlung in einem Ofen bei einer Temperatur zwischen 120 und 240°C ausgeführt wird.

4. Verfahren nach Anspruch 1 oder 2, **dadurch gekennzeichnet, daß** der Schritt der zweiten Wärmebehandlung in einem Ofen bei einer Temperatur im Bereich zwischen 120 und 240°C ausgeführt wird.

5. Verfahren nach Anspruch 1 oder 2, **dadurch gekennzeichnet, daß** die Gesamtdicke der ersten und der zweiten Schicht nach der Wärmebehandlung im Bereich zwischen 40 und 200 um (40 und 200 Mikron) liegt.

6. Verfahren nach Anspruch 1 oder 2, **dadurch gekennzeichnet, daß** die transparente wärmehärtbare Pulverfarbe Kunstharze, aus der Gruppe Epoxidharze, Polyesterharze, Polyurethanharze, Acrylharze und Mischungen dieser Stoffe gewählt, umfaßt.

7. Verfahren nach Anspruch 1 oder 2, **dadurch gekennzeichnet, daß** die zweite Schicht aus transparenter wärmehärtbarer Pulverfarbe einen Glanz zwischen 5 und 110 Glanzeinheiten, gemessen unter einem Winkel von 60°, hat.

## Revendications

1. Procédé de peinture en deux couches qui comprend les étapes consistant :
a) à appliquer sur la surface à peindre une première couche de peinture en poudre thermodurcissable comprenant des résines, et au moins un pigment ou colorant, et une charge, ledit pigment ou colorant étant un pigment ou colorant à dégorgement ;
b) à traiter tout d'abord ladite première couche de peinture dans un four pour la durcir ;
c) à appliquer une seconde couche de peinture en poudre thermodurcissable transparente sur la première couche de peinture durcie ;
d) à traiter ensuite dans un four de manière à dégorger les pigments ou colorants contenus dans la première couche de peinture en vue de les dissoudre uniformément à l'intérieur de la seconde couche de peinture tout en durcissant cette seconde couche de peinture.

2. Procédé de peinture à deux couches qui comprend les étapes consistant à :
a) appliquer sur la surface à peindre une composition de peinture en poudre thermodurcissable qui comprend un mélange d'au moins deux peintures en poudre thermodurcissable chacune comprenant des résines au moins un pigment ou colorant, et une charge, ledit pigment ou colorant étant un pigment ou colorant à dégorgement, avec au moins l'une des deux peintures contenant des pigments ou colorants à dégorgement de couleur différente ;
b) à traiter tout d'abord ladite première couche dans un four pour la durcir ;
c) appliquer une seconde couche d'une peinture en poudre thermodurcissable transparente sur la première couche durcie ;
d) à traiter ensuite dans un four de manière à durcir la seconde couche alors que les pigments ou colorants à dégorgement, contenus dans la première couche dégorgent et se dissolvent uniformément dans la seconde couche.

3. Procédé selon la revendication 1 ou 2 **caractérisé en ce que** l'étape qui inclue le premier traitement dans un four est réalisé à une température comprise entre 120 et 240° C.

4. Procédé selon la revendication 1 ou 2 **caractérisé en ce que** l'étape qui inclue le second traitement dans un four est réalisé à une température comprise entre 120 et 240° C.

5. Procédé selon la revendication 1 ou 2 **caractérisé en ce que** l'épaisseur totale de la première et seconde couche après durcissement est comprise entre 40 et 200 µm (40 et 200 microns).

6. Procédé selon la revendication 1 ou 2 **caractérisé en ce que** la peinture en poudre thermodurcissable transparente comprend des résines choisies dans le groupe constitué par les résines époxy, résines polyester, résines polyuréthanes, résines acryliques et leurs mélanges.

7. Procédé selon la revendication 1 ou 2 **caractérisé en ce que** la seconde couche de peinture en poudre thermodurcissable transparente a un reflet de brillance compris entre 50 et 110 mesuré à un angle de 60°.
